# EUROPEAN PATENT APPLICATION

(11) **EP 2 528 150 A1**
(43) Date of publication of application: **28.11.2012**
(21) Application number: 10843975.3
(22) Date of filing: 21.12.2010
(51) Int. Cl.: H01M 8/06, H01M 8/04, H01M 8/12

(54) **FUEL CELL SYSTEM**

(30) Priority: 22.01.2010 JP 2010012201
(71) Applicant: Konica Minolta Holdings, Inc., Tokyo 100-0005 (JP)
(72) Inventor: ISHIDA Nobuhisa, Hino-Shi Tokyo 191-8511 (JP); SAMESHIMA Kouichi, Hino-Shi Tokyo 191-8511 (JP); OHMORI Hiroko, Hino-Shi Tokyo 191-8511 (JP)
(74) Representative: HOFFMANN EITLE
(86) International application number: PCT/JP2010/072947
(87) International publication number: WO 2011/089811

(57) **Abstract**

Disclosed is a fuel cell system (101) having: a reaction container (103) that has a first heater (114); and a fuel cell (120) provided with a fuel electrode (121), an oxygen electrode (122), and an electrolyte membrane (123); wherein the reaction container (103) is attachable to/removable from the fuel cell (120).

## Description

### Technical Field

The present invention relates to a fuel cell system, more particularly, to a fuel cell system that includes a hydrogen occlusion material.

### Background Art

In recent years, because of high performance of electronic apparatuses, demand for a large capacity and a long life of a cell is increasing. As for a capacity of a conventional lithium ion battery, energy density per volume is reaching a theoretical limitation, and a dramatic performance increase is not expected any more. Under this circumstance, a fuel cell, which is dramatically excellent in energy density per volume compared with a conventional battery and able to have a large capacity, is attracting attention.

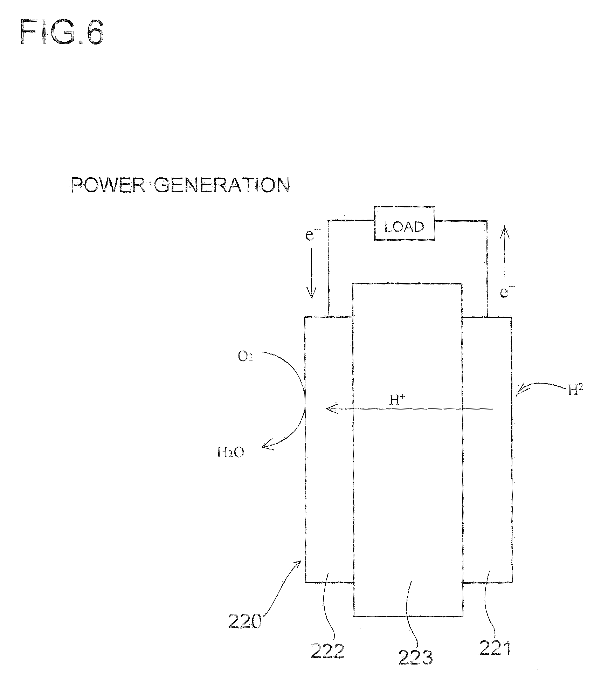

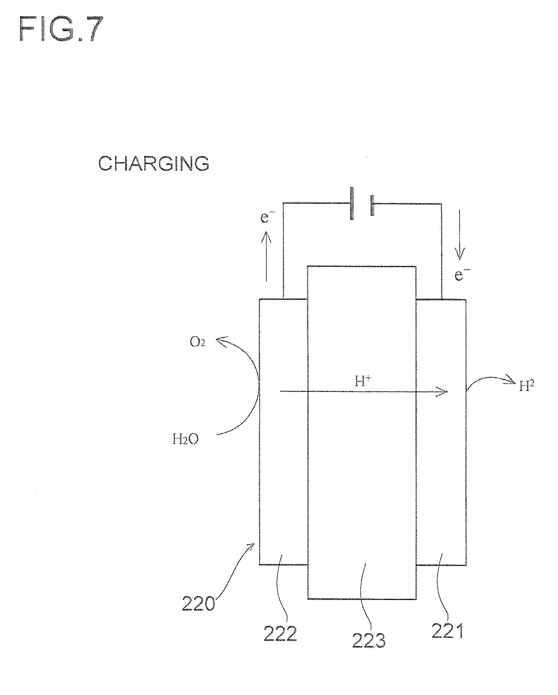

For example, a patent document 1 describes a chargeable fuel cell system; in this fuel system, a fuel cell and a hydrogen occlusion material are integrally formed with each other; and as the fuel cell, a solid polymer electrolyte fuel cell (hereinafter, called a PEFC) is used. Fig. 6 is a schematic view showing a reaction mechanism of a PEFC during a power generation time, and Fig. 7 is a schematic view showing a reaction mechanism of a PEFC during a charge time. A PEFC 200 is composed of a fuel electrode 221, an oxygen electrode 222, and an electrolyte membrane 223; and during a power generation time, at the fuel electrode 221, protons and electrons are generated from hydrogen; at the oxygen electrode 222, protons moving from the fuel electrode 221 and oxygen ions generated from oxygen react to each other to generate water.
The fuel electrode: H₂ → 2H⁺ + 2e⁻
The oxygen electrode : 4H⁺ + O₂ + 4e⁻ → 2H₂O

During a charge time, when reverse voltages are applied to the fuel electrode 221 and the oxygen electrode 222, reactions reverse to those during the power generation time occur at the fuel electrode 221 and the oxygen electrode 222.
The fuel electrode: 2H⁺ + 2e⁻ → H₂
The oxygen electrode : 2H₂O → 4H⁺ + O₂ + 4e⁻

In the fuel cell system described in the patent document 1, the hydrogen occlusion material for generating hydrogen is disposed; accordingly, during the power generation time, it is possible to supply hydrogen from the hydrogen occlusion material to the fuel electrode; and during the charge time, it is possible to make the hydrogen occlusion material occlude and store the hydrogen generated by the fuel electrode.

### Citation List

### Patent Literature

PLT1: JP-A-2002-151094

### Summary of Invention

### Technical Problem

However, generally, to generate hydrogen from a hydrogen occlusion material or store hydrogen in the hydrogen occlusion material, it is necessary to prompt the reaction by heating the hydrogen occlusion material. However, in the fuel cell system described in the patent document 1, a reaction adjustment mechanism is not studied, and it is conceivable that it is impossible to repeat the charging and discharging in a sustainable manner.

Because of this, to solve this problem, it is an object of the present invention to provide a fuel cell system that is renewable in a sustainable manner.

### Solution to Problem

To achieve the above object, a fuel cell system according to the present invention includes: a fuel cell that includes: a fuel electrode, an oxygen electrode, and an electrolyte membrane disposed between the fuel electrode and the oxygen electrode; a hydrogen occlusion material that supplies hydrogen to the fuel electrode; and an reaction container that incorporates the hydrogen occlusion material and has a temperature adjustment mechanism which adjusts an internal condition; wherein the fuel electrode generates water by means of the fuel electrode during a power generation time, and supplies the water to an inside of the reaction container.

According to this structure, it is possible to adjust the internal condition of the reaction container by means of the temperature adjustment mechanism, and control a reaction start condition of the hydrogen occlusion material and a reaction stop condition of the hydrogen occlusion material. In this way, during a power generation time, it is possible to make the hydrogen occlusion material emit hydrogen stably; and during a charge time, it is possible to stably store the hydrogen in the hydrogen occlusion material.

### Advantageous Effects of Invention

According to the present invention, it is possible to provide a fuel cell system that is renewable in a sustainable manner.

### Brief Description of Drawings

[Fig. 1] is a schematic view of a fuel cell system according to a first embodiment during a power generation time.
[Fig. 2] is a schematic view of a fuel cell system according to the first embodiment during a charge time.
[Fig. 3] is a view showing a reaction mechanism of an SOFC during a power generation time.
[Fig. 4] is a view showing a reaction mechanism of an SOFC during a charge time.
[Fig. 5] is a schematic view of the fuel cell system according to the first embodiment.
[Fig. 6] is a view showing a reaction mechanism of a PEFC during a power generation time.
[Fig. 7] is a view showing a reaction mechanism of a PEFC during a charge time.

### Description of Embodiments

Hereinafter, a fuel cell system according to the present invention is described with reference to the drawings.

### (First Embodiment)

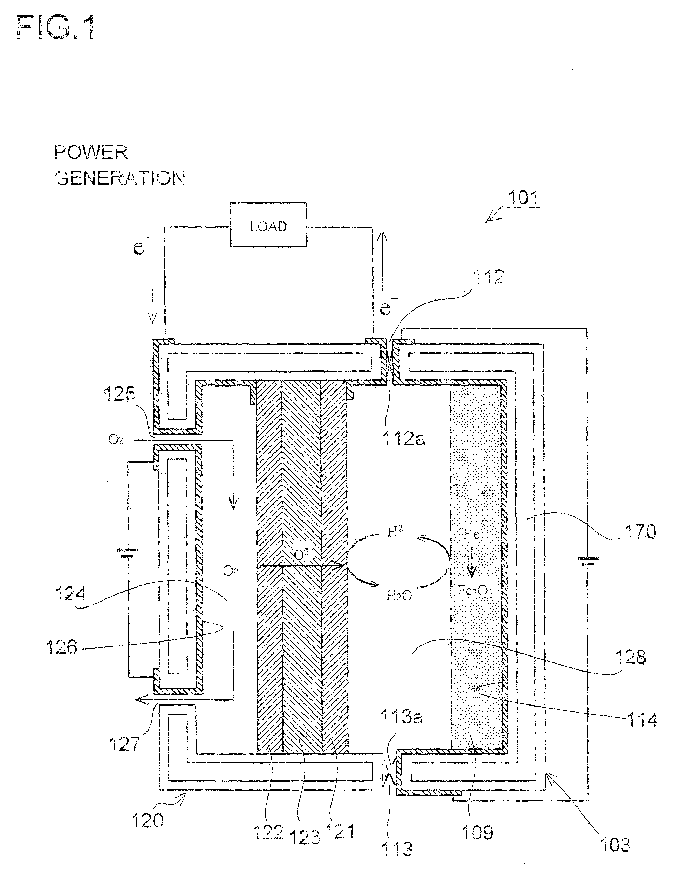

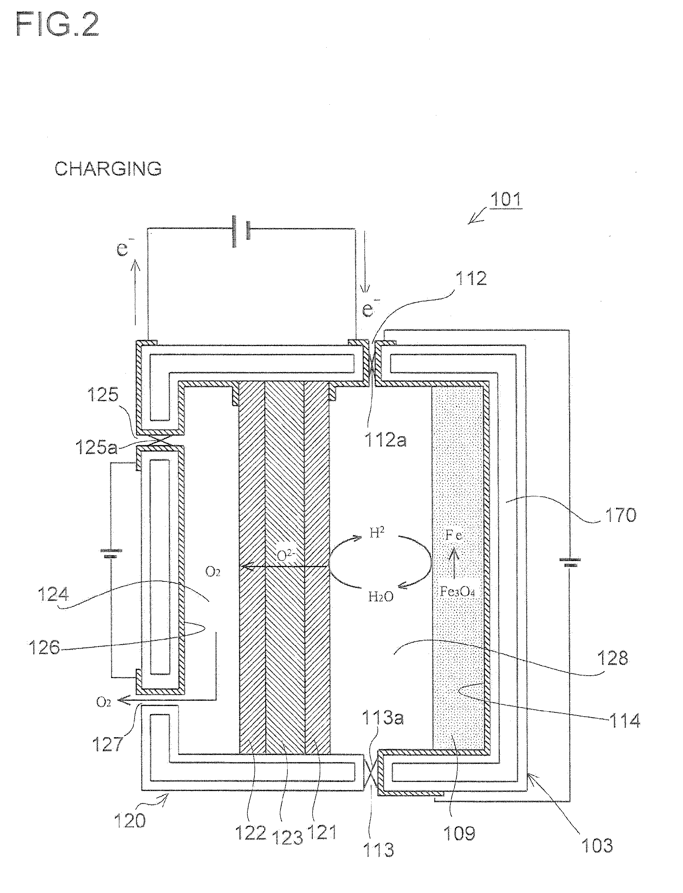

Fig. 1 and Fig. 2 are schematic views of a fuel cell system according to a first embodiment, of which Fig. 1 shows a state during a power generation time, and Fig. 2 shows a state during a charge time. As shown in Fig. 1 and Fig. 2, a fuel cell system 101 is composed of a solid oxide fuel cell 120 (hereinafter, called an SOFC) and a reaction container 103. The SOFC 120 is composed of a fuel electrode 121, an electrolyte membrane 123, and an oxygen electrode 122. Besides, an air chamber 124 is formed on an oxygen electrode 122 side of the SOFC 120, and a fuel chamber 128 is formed on a fuel electrode 121 side. The fuel chamber 128 is formed of an air space between the fuel electrode 121 and an inside of the reaction container 103 that is disposed adjacently to the fuel electrode 121. The reaction container 103 is mounted so as not to be electrically connected to the SOFC 120 via a first connection portion 112 and a second connection portion 113.

In the inside of the reaction container 103, iron microparticles are disposed as a hydrogen occlusion material 106 at a predetermined position. The reaction container 103 includes a heat-insulated structure having a cavity 170 between an outer wall and an inner wall, and has a first heater 114 for heating the inside of the reaction container 103. Here, although not shown, a fuel diffusion layer is formed on a surface of the fuel electrode 121, whereby it is possible to evenly supply hydrogen to the fuel electrode 121, and an air diffusion layer is formed on a surface of the oxygen electrode 122, whereby it is possible to evenly supply air to the oxygen electrode 121.

On the other hand, the air chamber 124 communicates with an oxygen supply line 125 and an oxygen discharge line 127, whereby air containing oxygen is supplied into an inside of the air chamber 124 via the oxygen supply line 125. Besides, the oxygen supply line 125 is provided with a valve 125a and the oxygen discharge line 127 is provided with a valve 127a, whereby it is possible to control the air supply into the air chamber 124.

The hydrogen occlusion material 106 is formed of the iron microparticles, which allow the following oxidation and reduction reactions to occur in the reaction container 103.
The oxidation reaction: 3Fe + 4H₂O → Fe₃O₄ + 4H₂
The reduction reaction: Fe₃O₄ + 4H₂ → 3Fe + 4H₂O

According to these reactions, the hydrogen occlusion material 106 emits hydrogen by means of an iron oxidation reaction during a power generation time, and stores hydrogen by means of an iron oxide reduction reaction during a charge time. The reduction reaction at the hydrogen occlusion material 106 is an endothermic reaction and the reaction temperature is high; however, by adjusting the internal temperature of the reaction container 103 by means of the first heater 114, it is possible to control the reaction at the hydrogen occlusion material 106.

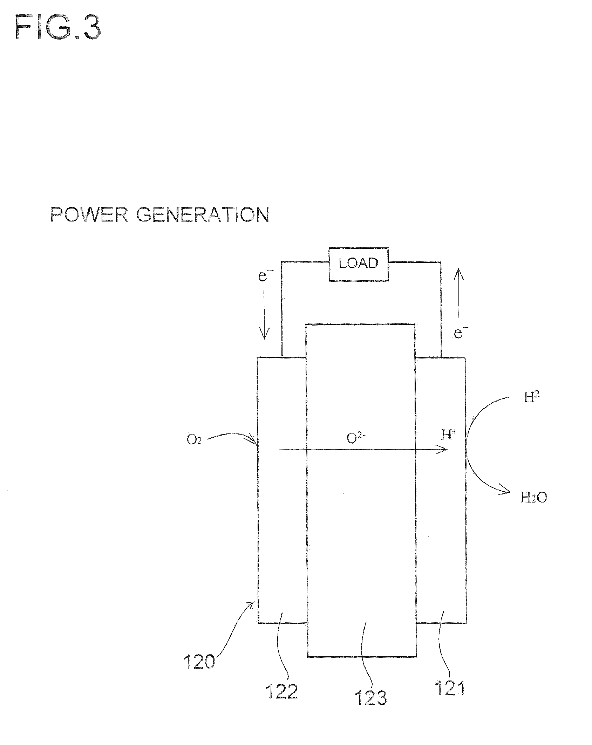

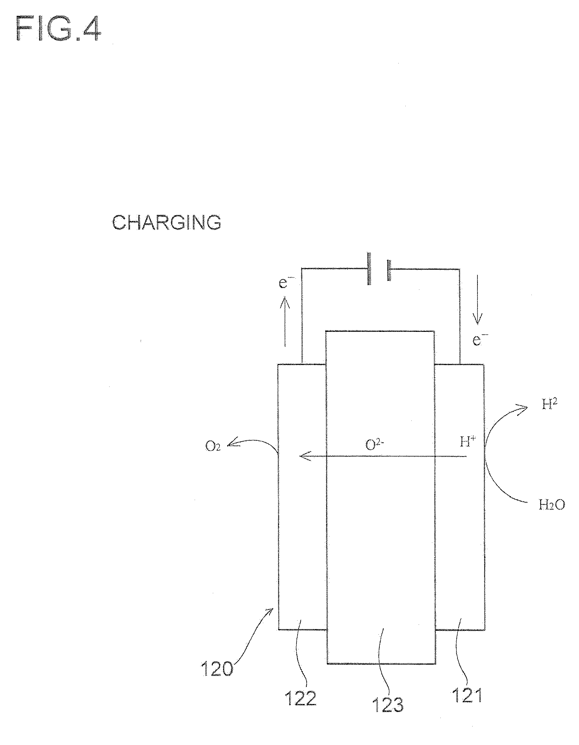

Fig. 3 is a schematic view showing a reaction mechanism of the SOFC during a power generation time, and Fig. 4 is a schematic view showing a reaction mechanism of the SOFC during a charge time. As shown in Fig. 3 and Fig. 4, in the SOFC 120, during a power generation time, the following reactions occur at the fuel electrode 121 and the oxygen electrode 122, whereby at the fuel electrode 121, protons and electrons are generated from hydrogen and at the oxygen electrode 122, oxygen ions are generated from oxygen. During this time, oxygen ions moving from the oxygen electrode 122 and protons react to each other, whereby water is generated at the fuel electrode 121.
The fuel electrode: H₂ + O²⁻ → H₂O + 2e⁻
The oxygen electrode: O₂ + 4e⁻ → 2O²⁻

Besides, when reverse voltages are applied to the fuel electrode 121 and the oxygen electrode 122 during a charge time, the following reactions reverse to those during the power generation time occur at the fuel electrode 121 and the oxygen electrode 122, whereby hydrogen is generated from the fuel electrode 121. By storing this hydrogen generated from the fuel electrode 121 in a hydrogen storing portion, it is possible to use the SOFC 120 as a chargeable secondary cell.
The fuel electrode: H₂O + 2e⁻ → H₂ + O²⁻
The oxygen electrode: 2O²⁻ → O₂ + 4e⁻

Next, an operation method of the fuel cell system 101 is described. During a power generation time, the first connection portion 112 and the second connection portion 113 are closed to tightly seal the reaction container 103, and the inside of the fuel chamber 128 is heated by means of the first heater 114, whereby the iron as the hydrogen occlusion material 106 is oxidized in the reaction container 103 to generate hydrogen, which is supplied to the fuel electrode 121. Here, the first connection portion 112 and the second connection portion 113 may be normally closed in a state where the reaction container 103 is mounted on the SOFC 120.

On the other hand, in the air chamber 124, the valve 125a of the oxygen supply line 125 and the valve 127a of the oxygen discharge line 127 are opened, whereby oxygen is supplied to the oxygen electrode 122 and the inside of the air chamber 124 is heated by means of a second heater 126. In this way, the SOFC 120 generates electric power by means of the electrochemical reaction. During this time, the water generated at the fuel electrode 121 is supplied to the hydrogen occlusion material 106 in the inside of the reaction container 103, thereby prompting the hydrogen generation reaction at the hydrogen occlusion material 106.

Accordingly, the water used for the hydrogen generation reaction at the hydrogen occlusion material 106 is directly suppliable from the fuel electrode 121, so that it is possible to efficiently use the water generated in the fuel cell system 101; and it is possible to achieve size reduction of the entire fuel cell system 101 and increase energy density per volume.

To stop the fuel cell system 101, the heating by means of the first heater 114 is stopped to stop the reaction at the hydrogen occlusion material 106; the valve 125a of the oxygen supply line 125 is closed to stop the oxygen supply and the heating by means of the second heater 126 is stopped, whereby it is possible to stop the electrochemical reaction at the SOFC 120.

Besides, to charge the fuel cell system 101, the first connection portion 112 and the second connection portion 113 are closed to tightly seal the reaction container 103; the inside of the reaction container 103 is heated by means of the first heater 114; the valve 125a of the oxygen supply line 125 is closed and the valve 127a of the oxygen discharge line 127 is opened; and the inside of the air chamber 124 is heated by means of the second heater 126. Besides, a negative voltage is applied to the fuel electrode 121, while a positive voltage is applied to the oxygen electrode 122. In this way, a reaction reverse to the reaction during the power generation time occurs at the SOFC 120, whereby hydrogen is generated from thee fuel electrode 121 and oxygen is generated from the oxygen electrode 122. During this time, the hydrogen generated from the fuel electrode 121 reduces the iron oxide in the reaction container 103 and is stored in the hydrogen occlusion material 106. Besides, the oxygen generated from the oxygen electrode 122 is discharged from the oxygen discharge line 127.

As described above, the operations of power generation, stop and charge in the fuel cell system 101 are controllable by means of the temperature adjustment in the reaction container 103 and the air chamber 124. Besides, the fuel electrode 121 of the SOFC 120 functions as a water supply source and a hydrogen supply source, so that it is possible to dispose the reaction container 103 adjacently to the fuel electrode 121, achieve the size reduction of the entire fuel cell system 101, and increase the energy density per volume.

Besides, as the fuel cell 120, instead of the SOFC, it is possible to use a fuel cell that generates water by means of the fuel electrode 121.

The iron used for the hydrogen occlusion material 106 is iron microparticles; to enlarge an actual surface area, a powdering process is performed; thereafter, micro-cracks are formed by means of hydrogen embrittlement; and an addition process is performed to add a sintering material into the micro-cracks by means of liquid phase deposition. The oxidation and reduction reactions between the iron and the water are promoted by this process, and the emission and absorption of the hydrogen in the reaction container 103 are stabilized.

Besides, in the present embodiment, the iron is used as the hydrogen occlusion material 106 that is renewable; however, it is possible to emit and occlude hydrogen by means of metal microparticles instead of the iron; and it is possible to use aluminum or magnesium to obtain the same reaction.

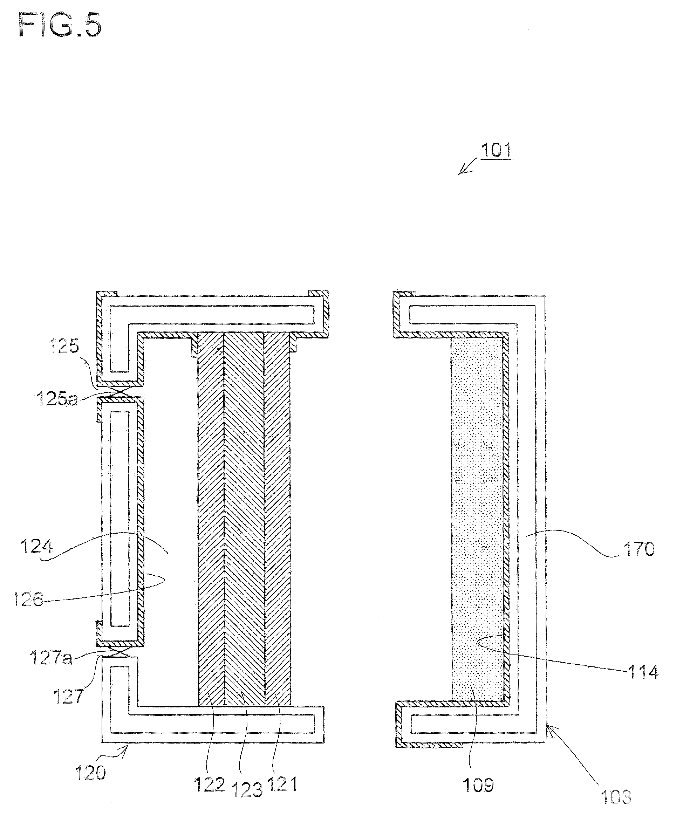

Besides, as shown in Fig. 5, in the fuel cell system 101 according to the present embodiment, the reaction container 103 is detachable from the SOFC 120. Because of this, when the hydrogen generation amount by the hydrogen occlusion material 106 in the reaction container 103 decreases and the output of the fuel cell 121 declines, by replacing the hydrogen occlusion material 106 together with the reaction container 103, it is possible to recover the output of the fuel cell 121. According to this, even if the negative voltage is not applied to the fuel electrode 121 of the SOFC 120 and the positive voltage is not applied to the oxygen electrode 122 for the charge, if the reaction container 103, which has the hydrogen occlusion material 106 that sufficiently stores hydrogen, is replaced as a charge cartridge, it is possible to renew and use the fuel cell system 101. Besides, it is possible to charge the reaction container 103, which has the hydrogen occlusion material 106, by means of another apparatus.

### Industrial Applicability

The present invention is not limited in usage and is preferably applicable as a power supply of an electronic apparatus.

### Reference Signs List

- 101: fuel cell system
- 103: reaction container
- 106: hydrogen occlusion material
- 112: first connection portion
- 113: second connection portion
- 114: first heater
- 120: fuel cell
- 121: fuel electrode
- 122: oxygen electrode
- 123: electrolyte membrane
- 124: air chamber
- 125: oxygen supply line
- 125a: valve on oxygen supply line
- 126: second heater
- 127: oxygen discharge line
- 127a: valve on oxygen discharge line
- 128: fuel chamber
- 170: cavity

## Claims

1. A fuel cell system comprising:
a fuel cell that includes: a fuel electrode; an oxygen electrode; and an electrolyte membrane disposed between the fuel electrode and the oxygen electrode;
a hydrogen occlusion material that supplies hydrogen to the fuel electrode; and
an reaction container that incorporates the hydrogen occlusion material and includes a temperature adjustment mechanism which adjusts an internal condition; wherein
the fuel electrode generates water by means of the fuel electrode during a power generation time, and supplies the water to an inside of the reaction container.

2. The fuel cell system according to claim 1, wherein
the reaction container is attachable to and detachable from the fuel cell.

3. The fuel cell system according to claim 1 or claim 2 wherein
the fuel cell generates hydrogen by means of the fuel electrode when a negative voltage is applied to the fuel electrode and a positive voltage is applied to the oxygen electrode, and supplies the hydrogen to the inside of the reaction container.

4. The fuel cell system according to any one of claim 1 to claim 3, wherein
the fuel cell is a solid oxide fuel cell (SOFC).

5. The fuel cell system according to any one of claim 1 to claim 4, wherein
the reaction container includes a heater as the temperature adjustment mechanism.

6. The fuel cell system according to any one of claim 1 to claim 5, wherein
the reaction container includes a heat-insulated structure.

7. The fuel cell system according to any one of claim 1 to claim 6, wherein
the hydrogen occlusion material contains iron.

8. The fuel cell system according to claim 7, wherein
the hydrogen occlusion material contains iron microparticles.

9. The fuel cell system according to claim 8, wherein
the iron microparticles are provided with micro-cracks, into which a sintering material is added.
